# EUROPEAN PATENT SPECIFICATION

(11) **EP 2 488 273 B1**
(45) Date of publication and mention of the grant of the patent: **04.04.2018**
(21) Application number: 10795027.1
(22) Date of filing: 15.10.2010
(51) Int. Cl.: B01D 29/15, B01D 35/153, B01D 35/18, B01D 29/96, B01D 29/58

(54) **TUBULAR FILTER**
ROHRFÖRMIGER FILTER
FILTRE TUBULAIRE

(30) Priority: 15.10.2009 FI 20096064
(43) Date of publication of application: 22.08.2012
(73) Proprietor: Parker Hannifin Manufacturing Finland OY, 31700 Urjala (FI)
(72) Inventor: KAPANEN, Petteri, 33720 Tampere (FI); YLHÄINEN, Mikko, 37500 Lempäälä (FI); SORRI, Antti, 31760 Urjala (FI)
(74) Representative: Berggren Oy, Tampere
(86) International application number: PCT/FI2010/050804
(87) International publication number: WO 2011/045476

(56) References cited:
- US-A- 5 846 417
- US-A- 6 053 334
- US-B1- 7 335 300
- US-B1- 7 531 090

## Description

### Technical field

The invention relates to filtration technology and concerns a filter comprising a cylindrical replaceable filtering element. The filter can be used for example for the cleaning of lubrication oils.

### Background art

For example circulating lubrication oil is cleaned by filters, which include a replaceable cylindrical filtering element.

Publication WO 2004/054684 discloses such a filter. It has a cylindrical main filtering element and a protection screen coaxially inside the same. In the event of clogging, a bypass valve opens and the liquid is allowed to flow to the inside of the reserve filter and from there outward through the reserve filter. Publication US 3,283,902 discloses a filter, which also has a reserve filter inside it, but in which the liquid travels also through the reserve even in a normal condition.

Publication US 6,053,334 discloses a filter which comprises a cylindrical filter insert without any reserve filter element and which is attached to the cap of the filter. In the upper portion of the central tube there are outlet openings, which are closed by means of a closing piece inside the tube when the insert is removed from the filter.

### General description of the invention

Now a filter and its use in accordance with the independent claims have been invented. The other claims present some preferred embodiments of the invention.

The filter includes a replaceable cylindrical filtering element and an outlet closure means, which blocks the flow of liquid into the outlet channel as the filtering element is removed. Thereby, the access of unfiltered liquid into the outlet channel during a replacement of the filtering element is prevented. The replacement process can be accompanied by discharging the unfiltered liquid from the filter. For this purpose, there is preferably a specific drain port.

The filter comprises a tube internal of the filtering element, by way of which the filtered liquid is discharged from the filter, most preferably by way of the bottom. The tube has openings in its shell for allowing the filtered liquid to pass into the tube thereby. The outlet closure means is a sleeve fitted coaxially with the conduit and provided with holes arranged such that, with the filtering element on its place, the filtered liquid is able to flow into the tube by way of the holes in the sleeve and the conduit. The sleeve lies externally of the tube. The sleeve can be set with a guide in a correct position relative to the tube holes.

The filter includes a spring for shifting the outlet closure means to a closing position as the filtering element is removed. The spring can be particularly located between the bottom and the sleeve. The bottom can also be a part of the unit's filtering block.

The filtering element may be provided with a support member, especially a support tube. The support member may also be an integral part of the filter body, in which case, therefore, there is no need to replace it as the filtering element is replaced.

The filtering element may especially be a so-called main filtering element, whereby there is coaxially therewith a second cylindrical filtering element, a so-called reserve filtering element, whose filtering resistance is not more than equal to that of the main filtering element. In this case, there is additionally a bypass closure means, which has a closed position for blocking the flow of liquid past the main filtering element, and an open position for allowing the flow of liquid past the main filtering element to the reserve filtering element, and a bypass closure means spring, which presses the bypass closure means to the closed position and which gives way as the pressure difference across the main filtering element exceeds a given value. In this way, the filter is provided with a bypass valve.

The filter may have a removable body-closing cap, which, when in attachment with the body, inflicts a compression of the spring. The main filtering element and the reserve filtering element are preferably integrated for a single dual filter element.

The filter may be constructed for example in such a way that the filtering block of the unit has a connection, along with its flow channels, pre-machined thereon for the filter. The block may comprise a number of filters.

In a normal case, the body comprises a single pair of main filtering element - reserve filtering element. However, another useful design is such that the body comprises several pairs of elements, each provided with its own removable cap.

The invention is particularly applicable for the cleaning of lubrication oils. The applications include for example filtration of circulating oils in engines and generators, as well as the circulating lubrication oil in paper making machines.

### Drawings

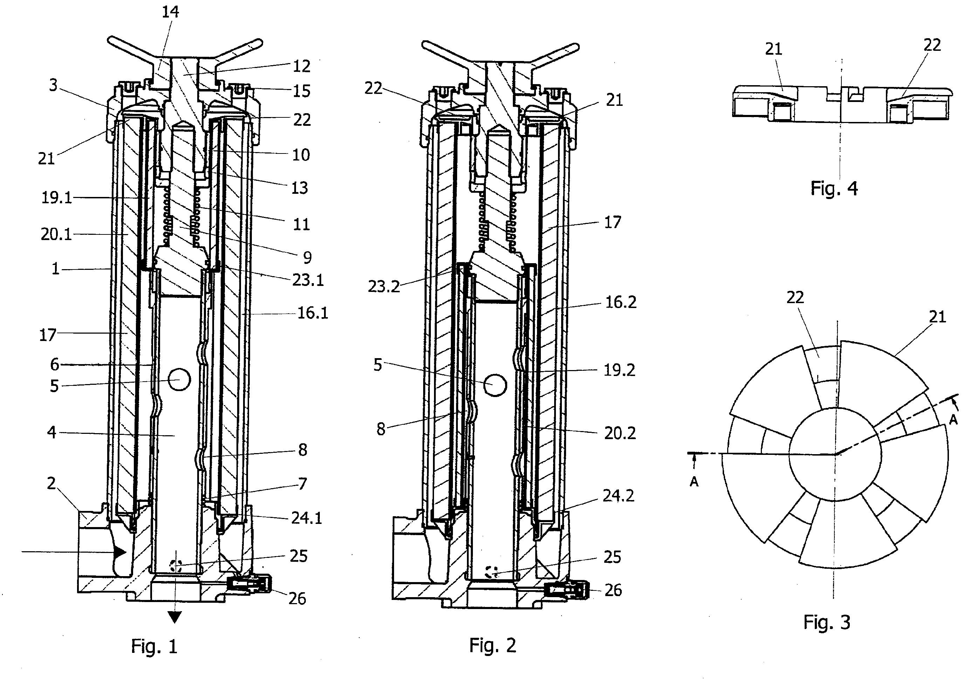

The attached drawings constitute a part of the written description of the invention and relate to the following detailed description of some embodiments of the invention. In the drawings, fig. 1 shows one filter of the invention in a sectional side view, fig. 2 shows another filter of the invention in a sectional side view, fig. 3 shows a filtering element for the filters of figs. 1 and 2 in an enlarged plan view, and fig. 4 shows a section of fig. 3.

### Detailed description of some embodiments of the invention

The filters according to the invention comprise a body 1 in the shape of a circular cylinder with a bottom 2 at its lower end and a removable cap 3 at its upper end.

The bottom 2 has on its side an inlet connection for the liquid to be filtered. In the middle is a pedestal with a recess therein. In the recess is fitted an axially directed hollow central tube 4. The recess has at its bottom an outlet for the filtered liquid. The central tube extends into the interior of the filter, more or less midway through it. The central tube has openings 5 in its shell along a length located inside the filter. Around the central tube is fitted a sleeve 6, whose top end extends to some extent above the central tube's top end. Between the sleeve's lower end and the bottom, around the central tube, is fitted a bottom spring 7 urging the sleeve upward. The sleeve shell has openings 8 matching the central tube's openings. When the filter is in operation, the openings are in register with each other, the liquid being able to flow through the sleeve into the central tube.

On a top end of the central tube 4 is mounted a stem 9 with its bottom end inside the tube. The stem includes a wider shoulder portion against the tube's top end, and a narrower shaft portion upward thereof. The shaft portion provides a spanner gap for installation. On the shaft portion is fitted a cup-shaped piston 10 with its bottom facing downward. Between the piston and the stem's shoulder portion, around the stem, is fitted a piston spring 11 striving to urge the piston to a high position. The stem has its end fitted with a fastening peg 12, such that its lower end is spaced from the piston's bottom. Thereby, a bypass valve, including the piston and the piston spring, is provided with a bias tension for facilitating a replacement of the filtering elements. The piston body is provided with holes 13 leading to this gap for equalizing a pressure difference between the piston faces. The fastening peg has its lower part sealed against the internal piston face. The fastening peg has its upper end extending above the body 1. The cap 3 is fixed by threading to the end of the fastening peg and sealed on the peg. The cap has a skirt sealed against an external surface of the body 1, and a hole in the middle in which the fastening peg is fitted and sealed. On top of the cap is a grip member 14. The grip member carries a screw thread and is in attachment with the cap by way of a retaining ring. Between the grip and the cap is a special slip ring. The cap is further provided with closable holes 15. These can be fitted with various sensors, venting cocks and the like.

The filter of fig. 1 comprises a filtering element 16.1. Spaced from the outer shell 1, it has a cylindrical main filtering element 17. On its internal surface there is a perforated support tube 18. At the top end of the main filtering element 16, on the inside and spaced from the main filtering element, there is a reserve filtering element 19.1, which is also spaced from the piston 12. On the external surface of the reserve filtering element there is a perforated support tube 20.1. The reserve filtering element is connected at its top end to the top end of the main filtering element by way of a flange-shaped overhead lid 21. The overhead lid features at its inner edge a downward extending cylindrical protrusion, whose bottom edge responds to the outer edge of the piston's upper end. The overhead lid features at its outer edge a downward protrusion along a surface of the main filtering element. Likewise, between the filtering elements, the overhead lid has a protrusion. The overhead lid features on its top surface radial groove-like flow channels 22, which extend from outside the main filtering element to a space between the reserve filtering element and the fastening peg 12, said space having in its lower part the upper end of the piston. The flow channel tapers as it progresses inward. The outer end has a horizontal portion and the inner end has a deepening portion.

The reserve filtering element 19.1 has its bottom end reinforced with a trough-like intermediate lid 23.1. Its bottom responds to the top end of the sleeve 6 and its inner edge is sealed against the outer edge of the shoulder portion of the stem 9. The main filtering element has its bottom end provided with a trough-like bottom lid 24.1. Its inner edge has a downward protrusion, which is sealed against the outer surface of a pedestal at the bottom 2.

When, in a filter as shown in fig. 1, the filter element 16.1 has been set in its position and the cap 3 has been closed by threading, said cap lies against the overhead lid 21 of the filter element and applies pressure to the piston spring 11 by way of the overhead lid and the piston 10. At the same time, the bottom spring 7 is pressed by way of the intermediate lid 23.1 and the sleeve 6. The openings 5 of the central tube and the openings 8 of the sleeve are in alignment. The liquid to be filtered is flowing from the inlet channel of the filter into a space between the filter body 1 and the main filtering element 17. In a normal condition, the liquid is filtered through the main filtering element only, and the filtered liquid continues to flow through the openings of the sleeve and central tube into the central tube and out from its bottom end. As the flow resistance across the main filtering element increases (as a result of the filter element contamination, for example), the pressure difference between its exterior and interior naturally increases as well. When the pressure difference grows to a sufficient magnitude, the piston spring gives way and the piston moves downward, such that the liquid is able to flow by way of the flow channels 22 into an interior of the reserve filtering element. The liquid is now filtered through the reserve filtering element and discharges from between the main filtering element and the reserve filtering element as in a normal condition.

The filter of fig. 2 comprises a filter element 16.2. Spaced from an outer shell 1, it also has a main filtering element 17 with an overhead lid 21 at its top end. The main filtering element 16 has its bottom end, on the inside and spaced from the main filtering element, provided with a reserve filtering element 19.2, which is also spaced from a sleeve 6. The reserve filtering element has on its inner surface a support tube 20.2. The reserve filtering element has a flow resistance which is lesser than that of the main filtering element. The reserve filtering element has top end reinforced with a trough-like intermediate lid 23.2, whose inner edge is in a sealed relationship against an outer edge of the shoulder portion of a stem 9, and whose bottom face responds to the top end of the sleeve. The reserve filtering element has its bottom end connected with the bottom of the main filtering element end by way of a flange-shaped bottom lid 24.2, which has an annular protrusion upward along the outer surface of the main filter element, into a space between the filtering elements, and along the inner surface of the reserve filtering element. In addition, the bottom lid has a protrusion downwards and is sealed against the outer surface of a pedestal at the bottom.

In the filter of fig. 2 as well, the liquid to be filtered is flowing from the inlet channel into the space between the filter's outer shell 1 and main filtering element 17. In a normal condition, the liquid is filtered through the main filtering element, and the filtered liquid continues to flow through the reserve filtering element and the openings 8, 5 of the sleeve and central tube into the central tube and out from its bottom end. As the flow resistance across the main filtering element increases to a sufficient magnitude, the piston spring gives way and the piston moves so as to allow the liquid to flow by way of flow channels 22 into the interior of the main filtering element. The liquid is now filtered through the reserve filtering element and discharges as in a normal condition.

When the cap 3 is opened, the bottom spring 7 is released and lifts the sleeve 6 upward in such a way that the openings 5 and 8 are no longer in alignment, thus blocking the flow of unfiltered liquid into the central tube. The liquid left in the filter is discharged by way of an outlet connection 25. At the same time, the sleeve carries the filtering element 16.1 or 16.2 upward. Thus, the filtering element is easy to remove.

The bottom is further provided on its outlet side with a side connection and therein a pressure difference indicator 26, from which there is a connection also to the inlet side.

## Claims

1. A filter, comprising
- a body (1) and an inlet channel for liquid to be filtered leading into it and an outlet channel for filtered liquid leading out of it,
- in the body, a replaceable cylindrical main filtering element (17) supplied with liquid from the inlet channel,
- a tube (4) internal of the filtering element (17), in the shell of which there are openings and by way of which the filtered liquid is removed from the filter,
- an outlet closure means (6), which blocks the flow of liquid into the outlet channel as the filtering element (17) is removed from the filter, and
- a spring (7) capable of moving the outlet closure means (6) to a closing position as the filtering element is removed,
**characterized in that**
- the outlet closure means (6) is a sleeve which is fitted coaxially externally of the tube and which has openings (8), which, when the filtering element is in its place, are aligned with the openings of the tube enabling the filtered liquid to flow by way of the openings into the tube, wherein, when the filtering element is removed, the spring (7) is released and lifts the sleeve upward in such a way that the openings (8) are not aligned with the openings of the tube thus blocking the flow of liquid into the tube.

2. A filter as set forth in claim 1, which includes a bottom (2) at the lower end of the filter and in which the spring (7) is located between the bottom and the sleeve (6).

3. A filter as set forth in any of claims 1,2, wherein the filtering element (17) is a main filtering element, and which includes, coaxially therewith, a cylindrical reserve filtering element (19.1; 19.2) whose filtering resistance is not more than equal to that of the main filtering element, and a bypass closure means (10) with a closed position, in which the flow of liquid past the main filtering element is precluded, an open position, in which the liquid is able to flow through the main filtering element to the reserve filtering element, and a bypass closure means spring (11), which urges the bypass closure means to the closed position and which gives way as the pressure difference across the main filtering element exceeds a given value.

4. A filter as set forth in claim 1, 2, or 3, which has a removable cap (3) closing the body (1), which cap, when in attachment with the body, causes a compression of the spring (7).

5. The use of a filter as set forth in any of claims 1-4 for the filtration of lubrication oil.

## Patentansprüche

1. Filter, aufweisend
- einen Körper (1) und einen Einlasskanal für zu filtrierende Flüssigkeit, der in diesen hineinführt, und einen Auslasskanal für filtrierte Flüssigkeit, der aus diesem herausführt,
- in dem Körper ein austauschbares zylindrisches Hauptfiltrierelement (17), das mit Flüssigkeit vom Einlasskanal versorgt wird,
- ein Rohr (4) im Inneren des Filtrierelements (17), in dessen Hülle Öffnungen vorhanden sind und durch welches die filtrierte Flüssigkeit aus dem Filter entfernt wird,
- Auslassschließmittel (6), die den Strom von Flüssigkeit in den Auslasskanal sperren, wenn das Filtrierelement (17) aus dem Filter entfernt ist, und
- eine Feder (7), die die Auslassschließmittel (6) in eine Schließposition verschieben kann, wenn das Filtrierelement entfernt ist, **dadurch gekennzeichnet, dass**
- es sich bei den Auslassschließmitteln (6) um eine Muffe handelt, die koaxial außerhalb des Rohrs aufgesetzt ist und Öffnungen (8) aufweist, die, wenn sich das Filtrierelement an seinem Platz befindet, mit den Öffnungen des Rohrs fluchten, wodurch die filtrierte Flüssigkeit über die Öffnungen in das Rohr fließen kann, wobei
wenn das Filtrierelement entfernt ist, die Feder (7) gelöst wird und die Muffe derart nach oben anhebt, dass die Öffnungen (8) nicht mit den Öffnungen des Rohrs fluchten, wodurch der Strom von Flüssigkeit in das Rohr gesperrt wird.

2. Filter nach Anspruch 1, der einen Boden (2) am unteren Ende des Filters umfasst und in dem sich die Feder (7) zwischen dem Boden und der Muffe (6) befindet.

3. Filter nach einem der Ansprüche 1 und 2, wobei das Filtrierelement (17) ein Hauptfiltrierelement ist und koaxial mit diesem ein zylindrisches Reservefiltrierelement (19.1; 19.2), dessen Filtrierwiderstand nicht mehr als gleich demjenigen des Hauptfiltrierelements ist, und Umlenkschließmittel (10) mit einer geschlossenen Position, in der der Strom von Flüssigkeit an dem Hauptfiltrierelement vorbei ausgeschlossen ist, einer geöffneten Position, in der die Flüssigkeit durch das Hauptfiltrierelement zum Reservefiltrierelement fließen kann, und eine Umlenkschließmittelfeder (11) umfasst, die die Umlenkschließmittel in die geschlossene Position drängt und nachgibt, wenn der Druckunterschied durch das Filtrierelement einen gegebenen Wert übersteigt.

4. Filter nach Anspruch 1, 2 oder 3, der eine abnehmbare Kappe (3) aufweist, die den Körper (1) verschließt, wobei die Kappe, wenn sie an dem Körper angebracht ist, eine Kompression der Feder (7) bewirkt.

5. Verwendung eines Filters nach einem der Ansprüche 1 bis 4 zum Filtrieren von Schmieröl.

## Revendications

1. Filtre, comprenant :
- un corps (1) et un canal d'entrée pour un liquide devant être filtré conduisant dans celui-ci et un canal de sortie pour le liquide filtré conduisant hors de celui-ci,
- dans le corps, un élément de filtrage principal cylindrique remplaçable (17) alimenté en liquide venant du canal d'entrée,
- un tube (4) interne de l'élément de filtrage (17), dans la coque duquel on trouve des ouvertures et au moyen duquel le liquide filtré est retiré du filtre,
- un moyen de fermeture de sortie (6), qui bloque le flux de liquide dans le canal de sortie lorsque l'élément de filtrage (17) est retiré du filtre,
et un ressort (7) capable de déplacer le moyen de fermeture de sortie (6) en une position de fermeture lorsque l'élément de filtrage est retiré, **caractérisé en ce que**
- le moyen de fermeture de sortie (6) est un manchon qui est ajusté de manière coaxiale à l'extérieur du tube et qui possède des ouvertures (8), qui, lorsque l'élément de filtrage se trouve à sa place, sont alignées avec les ouvertures du tube permettant au liquide filtré de s'écouler grâce aux ouvertures dans le tube, dans lequel, lorsque l'élément de filtrage est retiré, le ressort (7) est libéré et soulève le manchon vers le haut de telle sorte que les ouvertures (8) ne sont pas alignées avec les ouvertures du tube, bloquant ainsi le flux de liquide dans le tube.

2. Filtre selon la revendication 1, qui comprend un fond (2) au niveau de l'extrémité inférieure du filtre et dans lequel le ressort (7) est situé entre le fond et le manchon (6).

3. Filtre selon l'une quelconque des revendications 1 ou 2, dans lequel l'élément de filtrage (17) est un élément de filtrage principal, et qui comprend, de manière coaxiale avec celui-ci, un élément de filtrage de réserve cylindrique (19.1 ; 19.2) dont la résistance de filtrage n'est pas plus qu'égale à celle de l'élément de filtrage principal, et un moyen de fermeture de dérivation (10) avec une position fermée, dans lequel le flux de liquide passé par l'élément de filtrage principal est exclu, une position ouverte, dans laquelle le liquide peut circuler à travers l'élément de filtrage principal vers l'élément de filtrage de réserve, et un ressort d'un moyen de fermeture de dérivation (11), qui pousse le moyen de fermeture de dérivation vers la position fermée et qui s'écarte lorsque la différence de pression à travers l'élément de filtrage principal dépasse une valeur donnée.

4. Filtre selon la revendication 1, 2 ou 3, qui présente un couvercle amovible (3) fermant le corps (1), lequel couvercle, lorsqu'il est fixé au corps, entraîne une compression du ressort (7).

5. Utilisation d'un filtre selon l'une quelconque des revendications 1 à 4 permettant la filtration d'huile lubrifiante.
